# EUROPÄISCHE PATENTSCHRIFT

(11) **EP 3 334 515 B1**
(45) Veröffentlichungstag und Bekanntmachung des Hinweises auf die Patenterteilung: **04.11.2020**
(21) Anmeldenummer: 16731800.5
(22) Anmeldetag: 14.06.2016
(51) Int. Cl.: B01D 35/31, B01D 29/90, B01D 29/92

(54) **FILTERVORRICHTUNG**
FILTER DEVICE
DISPOSITIF FILTRANT

(30) Priorität: 12.08.2015 DE 102015010562
(43) Veröffentlichungstag der Anmeldung: 20.06.2018
(73) Patentinhaber: Hydac Filtertechnik GmbH, 66280 Sulzbach/Saar (DE)
(72) Erfinder: FIEDLER, Sebastian, 66583 Spiesen-Elversberg (DE); FUNK, Christian, 66292 Riegelsberg (DE); KORN, Jerome, 67655 Kaiserslautern (DE); HEROLD, Frank, 66129 Saarbrücken (DE); GROH, Christian, 66453 Gersheim (DE); KATTLER, Frank, 66346 Püttlingen (DE)
(74) Vertreter: Bartels und Partner, Patentanwälte
(86) Internationale Anmeldenummer: PCT/EP2016/000983
(87) Internationale Veröffentlichungsnummer: WO 2017/025161

(56) Entgegenhaltungen:
- WO-A1-2010/139706
- WO-A1-2011/060254
- WO-A1-2015/086440
- DE-A1-102010 025 627
- US-A1- 2012 248 024

## Beschreibung

Die Erfindung betrifft eine Filtervorrichtung zum Filtern von Fluid, insbesondere in Form einer wässrigen Harnstofflösung, mit den Merkmalen im Oberbegriff von Anspruch 1.

Durch die DE 10 2012 020 431 A1 ist eine Filtervorrichtung mit mindestens einem von einem abzureinigenden Fluid mit vorgebbarem Fluidbetriebsdruck durchströmbaren, in einem Gehäuse aufnehmbaren Filterelement bekannt, wobei der am jeweiligen Filterelement herrschende Fluiddruck das jeweilige Filterelement, insbesondere dessen Filtermaterial, schädigende Druckspitzen oder generelle Druckerhöhungen aufweisen kann, die mittels einer auf das jeweilige Filterelement direkt einwirkenden Ausgleichseinrichtung reduzierbar und/oder glättbar sind, die mindestens ein nachgiebiges Ausgleichselement aufweist, das entsprechend einer Druckspitze oder Druckerhöhung eine Vergrößerung des Volumens des Fluidraums des Gehäuses ermöglicht. Bei der bekannten Lösung ist das nachgiebige Ausgleichselement stromaufwärtig zwischen der Außenseite des Filtermaterials des Filterelements und der benachbarten Innenwand des Gehäuses angeordnet, d.h. die Fluidführung zwischen Ausgleichs- und Filterelement ist an den Fluideinlass angeschlossen und somit die Zufuhr von Fluid stromaufwärtig angeordnet, wohingegen das über das Filterelement abgereinigte Fluid stromabwärtig über eine mittig angeordnete Endkappenöffnung aus der Filtervorrichtung abgeführt wird.

Bei der bekannten Lösung ist das nachgiebige Ausgleichselement in der Art eines Einsatztopfes in das Gehäuse der Filtervorrichtung ausgebildet und besteht bevorzugt aus einem Zell-Kautschuk-Material. Mit der bekannten Lösung ist es auch möglich, die beim Gefrieren einer wässrigen Harnstofflösung, wie sie bei sog. SCR-Abgassystemen insbesondere in der Automobiltechnik zur Anwendung kommt, deren Volumenzunahme über das Zell-Kautschuk-Ausgleichselement zu kompensieren, um dergestalt durch die Volumenzunahme bedingt schädigende Druckeinflüsse auf das empfindliche Filterelementmaterial vermeiden zu helfen, was ansonsten zur Funktionsunfähigkeit der Filtervorrichtung führen könnte, insbesondere wenn durch das Gefrieren des Fluidmaterials das Filterelementmaterial einen Riss oder dergleichen erfährt. Wegen des verhältnismäßig steifen Materialverhaltens des für das Ausgleichselement eingesetzten Zell-Kautschuks ist die Ausgleichseinrichtung der bekannten Filtervorrichtung zwar geeignet, um, als Pulsationsdämpfer wirkend, schnelle Druckspitzen zu glätten oder abzumildern, ist jedoch weniger geeignet, die Volumenzunahme zu kompensieren, wie sie bei der Filtration wässriger Harnstofflösungen im Falle des Gefrierens auftritt.

Die US 2012/0248024 A1 beschreibt eine Filtervorrichtung zum Filtern von Fluid, insbesondere in Form einer wässrigen Harnstofflösung, mit den Merkmalen im Oberbegriff von Anspruch 1 mit einem Filtergehäuse und einem darin angeordneten Filterelement sowie einem Ausgleichselement zum Kompensieren von Druck- oder Volumenschwankungen des Fluids, wobei als Ausgleichselement mindestens ein elastisch nachgiebiger Hohlkörper eingesetzt ist, der in einer Richtung eine größere räumliche Ausdehnung hat als in einer anderen, quer dazu verlaufenden Richtung, der in einem Halteteil gehalten ist und der mit seiner Wand eine Trennung zwischen dem Fluid und einem kompressiblen Befüllmedium, wie einem Arbeitsgas, vornimmt, wobei ein fluiddurchlässiges Stützrohr vorgesehen ist, an dem sich außenumfangsseitig ein Filtermedium des Filterelements abstützt.

Weitere Filtervorrichtungen gehen aus der WO 2011/060254 A1, der WO 2015/086440 A1, der DE 10 2010 025 627 A1 und der WO 2010/139706 A1 hervor.

Ausgehend von dieser Problematik stellt sich die Erfindung die Aufgabe, eine Filtervorrichtung der eingangs genannten Gattung zur Verfügung zu stellen, bei der das Ausgleichselement einen besonders effektiven und sicheren Gefrierschutz bei einem Betrieb mit gefrierbaren Fluiden, wie einer wässrigen Harnstofflösung, zur Verfügung stellt.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass zumindest teilweise entlang der Richtung der größeren Ausdehnung des Hohlkörpers und entlang seiner Außenkontur ein zumindest teilweise fluiddurchlässiger Stützkörper angeordnet ist und dass in koaxialer Anordnung und mit einem vorgebbaren radialen Abstand der Stützkörper des Hohlkörpers von dem Stützrohr zumindest teilweise umfasst ist.

Bei einer derartigen äußeren Abstützung des Hohlkörpers, wie einer Speicherblase, zeichnen sich derartige Ausführungsbeispiele durch eine besonders hohe Betriebssicherheit über eine lange Betriebslebensdauer aus.

Es ist ferner vorgesehen, dass als Ausgleichselement mindestens ein elastisch nachgiebiger Hohlkörper eingesetzt ist, der in einer Richtung eine größere räumliche Ausdehnung hat als in einer anderen, quer dazu verlaufenden Richtung, der in einem Aufnahmeteil gehalten ist und der mit seiner Wand eine Trennung zwischen dem Fluid und einem kompressiblen Befüllmedium, wie einem Arbeitsgas, vornimmt. Mit dem Trennelement in Form eines mit kompressiblem Füllmedium versehenen Hohlkörpers bildet die für den Volumenausgleich im Falle des Gefrierens vorgesehene Ausgleichseinrichtung einen Druckspeicher, der bei an den Fluid-Betriebsdruck angepasstem Befülldruck des Füllmediums, wie dem Arbeitsgas, die im Gefrierfall erforderliche Volumenzunahme ohne eine das Filterelement schädigende, stärkere Druckerhöhung ermöglicht und sich somit in besonderem Maße als Gefrierschutz bei der Filtration von wässrigen Harnstofflösungen eignet, deren Filtration bei SCR-Abgassystemen bei mäßigem Fluid-Betriebsdruck erfolgt. Unabhängig hiervon ist die erfindungsgemäße Lösung nach wie vor geeignet, Druckspitzen und Druckpulsationen aufzufangen bzw. zu glätten.

Da das Ausgleichselement bei der bekannten Lösung, wie dargelegt, innerhalb des Gehäuses der Filtervorrichtung stromaufwärts angeordnet ist, nimmt es relativ viel Bauraum im Filtergehäuse ein. In vorteilhafter Weise kann die Anordnung bei der erfindungsgemäßen Vorrichtung demgegenüber derart getroffen sein, dass der das Ausgleichselement bildende Hohlkörper auf der stromabwärtigen Filtratseite des Filterelements angeordnet ist. Dadurch, dass der die Ausgleicheinrichtung bildende Druckspeicher in den vom Filtermedium umgebenen Gehäuseinnenraum verlegt ist, trägt die Ausgleichseinrichtung nicht zur Vergrößerung des Außenumfangs des die Außenseite des Filtermediums umgebenden Filtergehäuses bei.

Mit besonderem Vorteil kann der Hohlkörper aus einer Blase gebildet sein, wie sie bei Blasen-Hydrospeichern bzw. Membran-Hydrospeichern Verwendung finden. Die als Hydrospeicher konzipierte Ausgleichseinrichtung ermöglicht den im Gefrierfall erforderlichen Volumenausgleich mit sehr geringer und daher für das Filterelement unschädlicher Druckerhöhung.

Mit besonderem Vorteil kann der Hohlkörper aus Ethylen-Propylen-DienKautschuk (EPDM) oder aus hydriertem Acryl-Nitrilbutadien-Kautschuk (HNBR) bestehen. Diese Werkstoffe eignen sich besonders für Filtervorrichtungen für aggressive Fluide, wie wässrige Harnstofflösungen. Es versteht sich, dass für andere Anwendungen Nitrilbutadien-Kautschuk oder andere Elastomere benutzt werden können.

Mit besonderem Vorteil kann der Hohlkörper mittels eines Halteteils im Filtergehäuse gehalten sein, wobei über das Halteteil mittels einer Fülleinrichtung die Menge an Befüllmedium innerhalb des Hohlkörpers veränderbar ist. Der Befülldruck des Hohlkörpers, wie der Speicherblase, lässt sich dadurch auf einfache Weise an den Betriebs-Fluiddruck derart anpassen, dass ein optimaler Volumenausgleich im Gefrierfall gewährleistet ist.

Das Stützrohr kann integraler Bestandteil des jeweiligen Filterelements sein.

Dieses kann in der üblichen Weise zwei Endkappen aufweisen, zwischen denen sich das vorzugsweise plissierte, mehrlagige Filtermedium erstreckt, von denen mindestens eine Endkappe von dem Halteteil für den Hohlkörper durchgriffen ist.

In besonders vorteilhafter Weise kann zur Vermeidung von Totvolumen innerhalb des Filtergehäuses mindestens ein Aufnahmeblock in dieses Gehäuse eingesetzt sein, wobei vorzugsweise das blockartig ausgebildete Halteteil und/oder der Aufnahmeblock jeweils eine Temperiereinrichtung, insbesondere eine Heizeinrichtung, aufweist oder aufweisen. Mit besonderem Vorteil eignen sich derartige Ausführungsbeispiele für einen Einsatz bei SCR-Abgassystemen, weil durch Temperieren des Aufnahmeblocks und/oder des blockartig ausgebildeten Halteteils beim Betrieb der Filtervorrichtung unter Frostbedingungen sichergestellt ist, dass die wässrige Harnstofflösung durch Beheizen dieser Teile in flüssigem Zustand verbleibt, so dass der sichere Betrieb des SCR-Abgassystems gewährleistet ist, während gleichzeitig bei Stillstandszeiten unter Frostbedingungen und bei Gefrieren der Harnstofflösung das Filterelement gegen Beschädigung geschützt ist.

Bei in der Art einer Speicherblase ausgebildetem Hohlkörper kann dessen freier Rand mit einer Verdickung in der Art eines Randwulstes versehen sein, der in eine zuordenbare Ausnehmung am Halteteil formschlüssig eingreift und dadurch eine besonders sichere Verankerung des Hohlkörpers gewährleistet.

Nachstehend ist die Erfindung anhand von in der Zeichnung dargestellten Ausführungsbeispielen im Einzelnen erläutert. Es zeigen:
- Fig. 1: einen Längsschnitt eines Ausführungsbeispiels der erfindungsgemäßen Filtervorrichtung, das mit vom Filtergehäuse abgenommenem Filterkopf dargestellt ist;
- Fig. 2: eine Draufsicht des Filtergehäuses eines zweiten Ausführungsbeispiels, das ebenfalls mit abgenommenem Filterkopf dargestellt ist;
- Fig. 3: einen Längsschnitt des zweiten Ausführungsbeispiels entsprechend der Schnittlinie III-III von Fig. 2; und
- Fig. 4: einen Längsschnitt eines dritten Ausführungsbeispiels, das ebenfalls mit abgenommenem Filterkopf dargestellt ist.

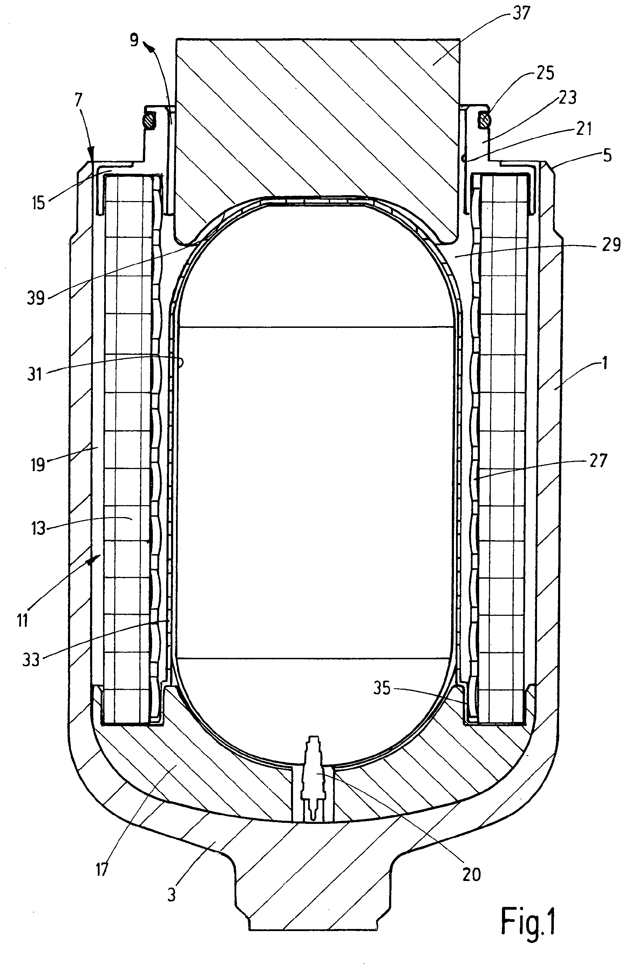

Unter Bezug auf die beigefügten Zeichnungen ist die Erfindung am Beispiel von Filtervorrichtungen beschrieben, die mit besonderem Vorteil bei SCR-Abgassystemen zur Filtration wässriger Harnstofflösungen einsetzbar sind. Das in Fig. 1 dargestellte Ausführungsbeispiel weist ein Filtergehäuse 1 in Form eines kreiszylindrischen Topfes mit geschlossenem gewölbten Boden 3 und offenem oberen Ende 5 auf. Ein am oberen Ende 5 auf das Gehäuse 1 aufschraubbarer Gehäusedeckel oder -kopf, der in Fig. 1 weggelassen ist, weist einen Fluideinlass und einen Fluidauslass auf, um das abzureinigende Fluid über einen Eintrittsbereich, der mit einem Strömungspfeil 7 bezeichnet ist, in das Gehäuse 1 einzuführen und über einen Austrittsbereich, der mit einem Strömungspfeil 9 bezeichnet ist, aus dem Gehäuse 1 abzuführen. In diesem ist ein Filterelement 11 herausnehmbar aufgenommen, das ein einen Hohlzylinder bildendes Filtermedium 13 aufweist, das in der bei derartigen Filtervorrichtungen üblichen Weise vorzugsweise plissiert und mehrlagig aufgebaut ist und sich zwischen einer in Fig. 1 obenliegenden Endkappe 15 und einer unteren Endkappe 17 erstreckt.

Das Filterelement 11 ist im Gehäuse 1 derart aufgenommen, dass sich die Außenseite des Filtermediums 13 in einem Abstand von der Gehäusewand befindet, so dass ein das Filtermedium 13 umgebender Raum 19 gebildet ist, der an den Fluideinlassbereich angrenzt, der mit dem Strömungspfeil 7 bezeichnet ist und beim Filtervorgang die Rohseite bildet. Die untere Endkappe 17 weist eine verhältnismäßig großvolumige Form auf, die mit ihrer Außenseite bei eingebautem Filterelement 11 an der Innenseite des gewölbten Bodens 3 des Gehäuses anliegt. Bis auf ein im Zentralbereich eingesetztes Füllventil 20 ist die Endkappe 17 geschlossen. Die obere Endkappe 15 hat die Form eines eine zentrale Öffnung 21 umgebenden Ringkörpers mit einem entlang der Öffnung 21 axial nach oben ragenden Stutzen 23, an dessen Außenseite sich ein O-Ring 25 befindet, der bei geschlossenem Gehäuse 1 die Abdichtung zwischen Einströmbereich (Strömungspfeil 7) und Ausströmbereich (Strömungspfeil 9) bildet. An der Innenseite des Filtermediums 13 liegt ein Fluiddurchlässe aufweisendes Stützrohr 27 an, dessen Enden, zusammen mit den Enden des Filtermediums 13, in den eine Einfassung bildenden Endkappen 15 und 17 aufgenommen sind, wobei die Enden von Filtermedium 13 und Stützrohr 27 in den Endkappen 15 und 17 festgelegt sind, beispielsweise durch Verkleben.

In dem an die Innenseite des Stützrohres 27 angrenzenden inneren Filterhohlraum 29, der bei der Filtration die stromabwärtige Filtratseite bildet, ist als Ausgleichselement, das die Volumenzunahme des gefrierenden Fluids kompensiert, bei dem Ausführungsbeispiel von Fig. 1 in dem inneren Filterhohlraum 29, der an die Innenseite des Stützrohres 27 angrenzt und bei der Filtration die stromabwärtige Filtratseite bildet, als Ausgleichselement eine Speicherblase 31 angeordnet, wie sie bei Blasen-Hydrospeichern Verwendung findet. Bei Befüllung der dünnwandigen Speicherblase 31 mit einem kompressiblen Befüllmedium, wie einem Arbeitsgas, vorzugsweise Stickstoffgas, bildet die Speicherblase 31 einen in den Filterhohlraum 29 integrierten Druckspeicher, bei Füllung mit Arbeitsgas einen hydropneumatischen Blasenspeicher, wobei als Werkstoff für die Speicherblase 31 bei aggressiven Fluiden, wie wässriger Harnstofflösung, ein Elastomer, wie Ethylen-Propylen-Dien-Kautschuk (EPDM) oder hydrierter Acryl-Nitrilbutadien-Kautschuk (HNBR) vorgesehen sein kann.

Bei dem Ausführungsbeispiel von Fig. 1 ist für die Speicherblase 31 ein Fluiddurchlässe aufweisender, äußerer Stützkörper 33 vorgesehen, der sich in Form einer gitterartigen Struktur von der unteren Endkappe 17 weg entlang der gesamten Außenseite der Blase 31 erstreckt und mit seinem unteren Endrand 35 zusammen mit dem Ende des Stützrohres 17 und dem Ende des Filtermediums 13 an der unteren Endkappe 17 festgelegt ist, so dass diese das Halteteil bildet, mit dem die Blase 31 im Filtergehäuse 1 gehalten ist. Da die untere Endkappe 17 großvolumig ausgebildet und mit ihrer Außenseite flächig an der Innenseite des Bodens 3 des Speichergehäuses anliegt, bildet diese Endkappe 17 einen Formkörper, der das die Blase 31 umgebende Totvolumen des inneren Filterhohlraums 29 im Bodenbereich des Gehäuses 1 begrenzt. Für die Begrenzung des Totvolumens des Raums 29 ist ein Aufnahmeblock 37 in das Filtergehäuse 1 eingesetzt, der an seiner Innenseite 39 derart geformt ist, dass er die zugewandte Außenseite des Stützkörpers 33 mit geringem Abstand umgibt. Der Außendurchmesser des Aufnahmeblocks 37 ist geringer als der Innendurchmesser der Öffnung 21 der oberen Endkappe 15, so dass an der Außenseite des Aufnahmeblocks 37 ein Fluidweg für den mit Strömungspfeil 9 bezeichneten Ausströmbereich freibleibt. Für die Befüllung der Speicherblase 31 über das Füllventil 20 ist das Filterelement 11 zusammen mit dem Aufnahmeblock 37 aus dem Filtergehäuse 1 herausnehmbar. Der Aufnahmeblock 37 kann mit einer Heizeinrichtung versehen sein, die die Temperierung des im inneren Filterhohlraum 29 befindlichen Fluids ermöglicht.

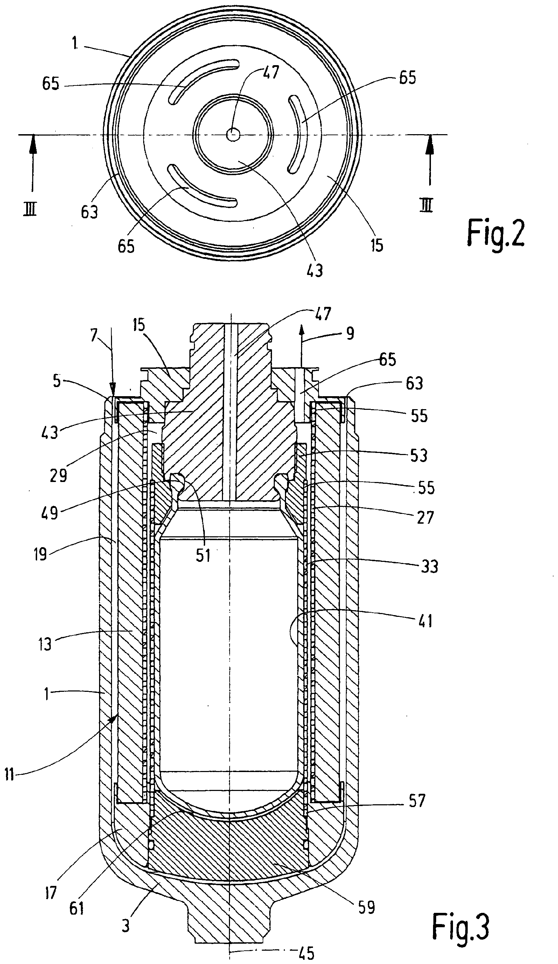

Bei dem in Fig. 2 und 3 gezeigten zweiten Ausführungsbeispiel ist als nachgiebiger Hohlkörper eine Membran 41 vorgesehen, wie sie bei als Membranspeicher konzipierten Druckspeichern eingesetzt ist. Bei Befüllung mit einem gasförmigen Befüllmedium bildet das Ausgleichselement daher, wie beim ersten Ausführungsbeispiel, einen hydropneumatischen Druckspeicher, der in den inneren Filterhohlraum 29 integriert ist, der beim Filtervorgang die stromabwärtige Filtratseite bildet. Während beim erstbeschriebenen Beispiel die untere Endkappe 17 das Halteteil für den nachgiebigen Hohlkörper in Form der Speicherblase 31 bildet, ist beim Ausführungsbeispiel von Fig. 2 und 3 für die Membran 41 ein Halteteil 43 vorgesehen, das die obere Endkappe 15 durchgreift und einen zur Vorrichtungs-Längsachse 45 koaxialen Füllkanal 47 aufweist, über den der Innenraum der Membran 41 mit dem jeweiligen Füllmedium befüllbar ist, beispielsweise einem Arbeitsgas, wie Stickstoffgas.

Ein am Füllkanal 47 befindliches Füllventil ist in der Zeichnung nicht dargestellt. In bei Membranspeichern üblicher Weise weist die Membran 41 am offenen Ende eine Randverdickung 49 auf, die in eine Ausnehmung 51 im Halteteil 43 formschlüssig eingreift. Dieser Eingriff ist mittels einer Überwurfmutter 53 gesichert, die vom innenliegenden Ende des Halteteils 43 auf dieses aufgeschraubt ist. Wie beim ersten Ausführungsbeispiel ist ein Stützkörper 33 vorgesehen, der sich entlang der achsparallelen Außenseite des Hohlkörpers, hier der Membran 41, erstreckt. Der Stützkörper 33 ist beim Beispiel von Fig. 2 und 3 durch eine netz- oder gitterartige Struktur, hier in Form eines Hohlzylinders, gebildet, der am oberen Ende 55 mit der Mutter 53 verbunden, beispielsweise verschweißt oder verklebt ist und am unteren Ende 57 mit einem Aufnahmeblock 59 verbunden, beispielsweise verklebt oder verschweißt ist. Der Aufnahmeblock 59 bildet, wie der Aufnahmeblock 37 beim ersten Ausführungsbeispiel, einen Formkörper, der an seiner Innenseite 61 so geformt ist, dass er der zugewandten Außenseite der Membran 41 nachfolgt und mit seiner Außenseite flächig an der Innenseite des Bodens 3 des Gehäuses 1 anliegt. Zusammen mit dem umgebenden Endteil der Endkappe 17 ist daher ein das Totvolumen im Gehäuse 1 verringernder Füllkörper gebildet.

Wie beim ersten Ausführungsbeispiel befindet sich der Einströmbereich 63, über den, wie mit Strömungspfeil7 angedeutet, das abzureinigende Fluid einströmt, am Umfang der oberen Endkappe 15. Als Ausströmbereiche, über die das abgereinigte Fluid abströmt, sind in der Endkappe 15 Durchbrüche in Form von sich über einen Teilkreis erstreckenden Schlitzen 65 vorgesehen.

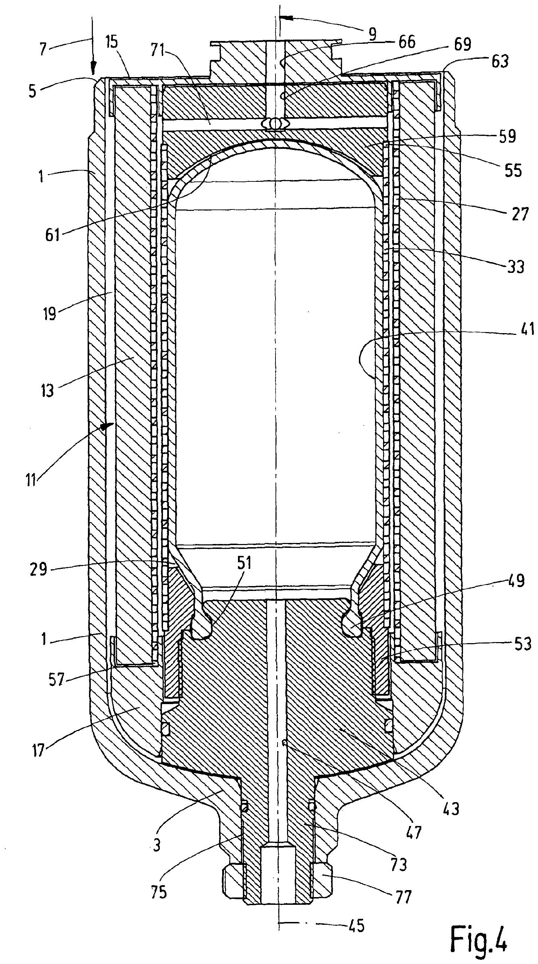

Die Fig. 4 zeigt ein drittes Ausführungsbeispiel, bei dem das Ausgleichselement in ähnlicher Weise aufgebaut ist, wie beim zweiten Ausführungsbeispiel und dementsprechend als Hohlkörper eine Membran 41 aufweist, die in Entsprechung zum vorherigen Ausführungsbeispiel mit ihrer Randverdickung 49 am Halteteil 43 festgelegt und daran mit Überwurfmutter 53 gesichert ist. Beim Beispiel von Fig. 4 durchgreift jedoch das Halteteil 43 die am Boden 3 des Gehäuses 1 befindliche untere Endkappe 17, mit der zusammen das Halteteil 43 einen das Totvolumen auf der Seite des Bodens 3 verringernden Füllkörper bildet. Während der Einströmbereich 63 sich wie bei den vorherigen Ausführungsbeispielen am Umfangsrand der oberen Endkappe 15 befindet, ist ein Ausströmbereich durch einen zur Achse 45 koaxialen Durchgang 66 in der oberen Endkappe 15 gebildet. In dem Aufnahmeblock 59, der wie beim vorherigen Ausführungsbeispiel den das Totvolumen am geschlossenen Ende der Membran 41 verringernden Formkörper bildet, befindet sich eine zum Durchgang 66 führende Bohrung 69, in die eine Querbohrung 71 einmündet, die den die stromabwärtige Filtratseite bildenden Hohlraum 29 über die Bohrung 69 mit dem den Ausströmbereich (Strömungspfeil 9) bildenden Durchgang 66 verbindet.

Wie beim zuvor beschriebenen Beispiel ist, bei Befüllung des Innenraums der Membran 41 mit einem Arbeitsgas, das Ausgleichselement durch einen ins Innere des Filtergehäuses integrierten hydropneumatischen Membranspeicher gebildet. Beim Beispiel von Fig. 4 ist ein den Boden 3 des Gehäuses 1 durchgreifender Fortsatz 73 des Halteteils 43 mit einer im Boden 3 befindlichen Gewindebohrung 75 verschraubt, wobei die Verschraubung mit einer Mutter 77 gesichert ist, so dass das Halteteil 43 im Filtergehäuse 1 festgelegt ist. Durch Lösen der Mutter 77 und der Verschraubung im Boden 3 ist jedoch das Filterelement 11 zusammen mit dem Ausgleichselement aus dem Gehäuse 1 herausnehmbar.

Je nach Volumenzunahme der gefrierenden Harnstofflösung wird das dünnwandige Material des Ausgleichselements gegen die Wirkung des kompressiblen Stickstoffgases im Inneren des Ausgleichselements zusammengedrückt und dergestalt das empfindliche Filtermaterial vor Druckeinwirkung durch die Volumenzunahme geschützt. Im flüssigen Zustand dehnt sich das Ausgleichselement unter der Wirkung des Arbeitsgases wieder aus und nimmt seine ursprüngliche Lage wieder ein, bei der das Ausgleichselement zur Schonung seiner empfindlichen Membran- oder Blasenaußenseite in Anlage mit seinem Stützkörper 33 kommt. Dies hat so keine Entsprechung im Stand der Technik.

## Patentansprüche

1. Filtervorrichtung zum Filtern von Fluid, insbesondere in Form einer wässrigen Harnstofflösung, mit einem Filtergehäuse (1) und einem darin angeordneten Filterelement (11) sowie einem Ausgleichselement zum Kompensieren von Druck- oder Volumenschwankungen des Fluids, wobei als Ausgleichselement mindestens ein elastisch nachgiebiger Hohlkörper (31; 41) eingesetzt ist, der in einer Richtung eine größere räumliche Ausdehnung hat als in einer anderen, quer dazu verlaufenden Richtung, der in einem Halteteil (17; 43) gehalten ist und der mit seiner Wand eine Trennung zwischen dem Fluid und einem kompressiblen Befüllmedium, wie einem Arbeitsgas, vornimmt, wobei ein fluiddurchlässiges Stützrohr (27) vorgesehen ist, an dem sich außenumfangsseitig ein Filtermedium (13) des Filterelements (11) abstützt, **dadurch gekennzeichnet, dass** zumindest teilweise entlang der Richtung der größeren Ausdehnung des Hohlkörpers (31; 41) und entlang seiner Außenkontur ein zumindest teilweise fluiddurehlässiger Stützkörper (33) angeordnet ist und dass in koaxialer Anordnung und mit einem vorgebbaren radialen Abstand der Stützkörper (33) des Hohlkörpers (31; 41) von dem Stützrohr (27) zumindest teilweise umfasst ist.

2. Filtervorrichtung nach Anspruch 1, **dadurch gekennzeichnet, dass** das Ausgleichselement (31; 41) auf der stromabwärtigen Filtratseite (29) des Filterelements (11) angeordnet ist.

3. Filtervorrichtung nach Anspruch 1 oder 2, **dadurch gekennzeichnet, dass** der Hohlkörper aus einer Blase (31) oder einer Membran (41) gebildet ist, wie sie vergleichbar bei Blasen-Hydrospeichern bzw. Membran-Hydrospeichern Verwendung finden.

4. Filtervorrichtung nach Anspruch 3, **dadurch gekennzeichnet, dass** der Hohlkörper aus EPDM oder HNBR besteht.

5. Filtervorrichtung nach einem der vorstehenden Ansprüche, **dadurch gekennzeichnet, dass** der Hohlkörper (31; 41) mittels des Halteteils (17; 43) im Filtergehäuse (1) gehalten ist und dass über das Halteteil (17; 43) mittels einer Fülleinrichtung (20) die Menge an Befüllmedium innerhalb des Hohlkörpers (31; 41) veränderbar ist.

6. Filtervorrichtung nach einem der vorstehenden Ansprüche, **dadurch gekennzeichnet, dass** das Filterelement (11) zwei Endkappen (15, 17) aufweist, zwischen denen sich das vorzugsweise plissierte, mehrlagige Filtermedium (13) erstreckt, von denen mindestens eine von dem Halteteil (43) für den Hohlkörper (41) durchgriffen ist.

7. Filtervorrichtung nach einem der vorstehenden Ansprüche, **dadurch gekennzeichnet, dass** zur Vermeidung von Totvolumen innerhalb des Filtergehäuses (1) mindestens ein Aufnahmeblock (37; 59) in dieses Gehäuse (1) eingesetzt ist und dass vorzugsweise das blockartig ausgebildete Halteteil (43) und/oder der Aufnahmeblock (37; 59) jeweils eine Temperiereinrichtung, insbesondere eine Heizeinrichtung, aufweist oder aufweisen.

8. Filtervorrichtung nach einem der vorstehenden Ansprüche, **dadurch gekennzeichnet, dass** der freie Rand des Hohlkörpers (41) in der Art einer Speicherblase mit einer Verdickung (49) versehen ist, die in eine zuordenbare Ausnehmung (51) am Halteteil (43) formschlüssig eingreift.

## Claims

1. Filter device for filtering fluid, particularly in the form of an aqueous urea solution, with a filter housing (1) and a filter element (11) arranged therein and with a compensating element to compensate for pressure or volume fluctuations in the fluid, at least one elastically flexible hollow body (31; 41) being used as the compensating element, said hollow body having a larger spatial extension in one direction than in another direction running transverse to said first direction, said body being held in a holding part (17; 43) and with its wall forming a separation between the fluid and a compressible filling medium, such as a working gas, a fluid-permeable support tube (27) being provided, on which a filter medium (13) of the filter element (11) is supported on the outer circumference, **characterised in that** an at least partially fluid-permeable support body (33) is arranged at least partially along the direction of the larger extension of the hollow body (31; 41) and along its outer contour, and **in that** the support body (33) of the hollow body (31; 41) is at least partially enclosed by the support tube (27) in a coaxial arrangement and at a pre-definable radial distance.

2. Filter device according to claim 1, **characterised in that** the compensating element (31; 41) is arranged on the downstream filtrate side (29) of the filter element (11).

3. Filter device according to either claim 1 or claim 2, **characterised in that** the hollow body is formed by a bladder (31) or a membrane (41), as are used for comparable purposes in hydraulic bladder accumulators or hydraulic membrane accumulators.

4. Filter device according to claim 3, **characterised in that** the hollow body consists of EPDM or HNBR.

5. Filter device according to any one of the preceding claims, **characterised in that** the hollow body (31; 41) is held in the filter housing (1) by means of the holding part (17; 43) and **in that** the volume of filling medium inside the hollow body (31; 41) can be changed via the holding part (17; 43) by means of a filling device (20).

6. Filter device according to any one of the preceding claims, **characterised in that** the filter element (11) comprises two end caps (15, 17), between which the preferably pleated, multi-layer filter medium (13) extends, the holding part (43) for the hollow cylinder (41) passing through at least one of said end caps.

7. Filter device according to any one of the preceding claims, **characterised in that**, to avoid dead volume inside the filter housing (1), at least one receiving block (37; 59) is inserted in said housing (1) and **in that** preferably the block-shaped holding part (43) and/or the receiving block (37; 59) in each case comprises or comprise a tempering device, in particular a heating device.

8. Filter device according to any one of the preceding claims, **characterised in that** the free edge of the hollow body (41) in the form of an accumulator bladder is furnished with a thickened area (49), which engages in a form-fitting manner in an assignable recess (51) on the holding part (43).

## Revendications

1. Dispositif de filtration pour filtrer du fluide, notamment sous la forme d'une solution aqueuse d'urée, comprenant un corps (1) de filtre et un élément (11) de filtre, qui y est disposé, ainsi qu'un élément de compensation pour compenser des fluctuations de pression ou de volume du fluide, dans lequel il est utilisé, comme élément de compensation, au moins un corps (31 ; 41) creux cédant élastiquement, qui a une étendue dans l'espace plus grande dans une direction que dans une autre direction, qui y est perpendiculaire, qui est maintenu dans une partie (17 ; 43) de maintien et qui donne, par sa paroi, une séparation entre le fluide et un milieu de remplissage compressible, comme un gaz de travail, dans lequel il est prévu un tube (27) d'appui perméable au fluide, sur lequel s'appuie, du côté du pourtour extérieur, un milieu (13) filtrant de l'élément (11) de filtre, **caractérisé en ce qu'**au moins en partie, suivant la direction de l'étendue la plus grande du corps (31 ; 41) creux et suivant son contour extérieur, est disposé un corps (33) d'appui perméable au fluide, au moins en partie, et **en ce que**, dans l'agencement axial et à une distance radiale pouvant être donnée à l'avance du corps (33) d'appui, le corps (31 ; 41) creux est entouré, au moins en partie, du tube (27) d'appui.

2. Dispositif de filtration suivant la revendication 1, **caractérisé en ce que** l'élément (31 ; 41) de compensation est disposé du côté (29) du filtrat en aval de l'élément (11) de filtre.

3. Dispositif de filtration suivant la revendication 1 ou 2, **caractérisé en ce que** le corps creux est formé d'une vessie (31) ou d'une membrane (41), comme elles trouvent utilisation d'une manière comparable dans des accumulateurs hydrauliques à vessie ou de accumulateurs hydrauliques à membrane.

4. Dispositif de filtration suivant la revendication 3, **caractérisé en ce que** le corps creux est en EPDM ou en HNBR.

5. Dispositif de filtration suivant l'une des revendications précédentes, **caractérisé en ce que** le corps (31 ; 41) creux est maintenu dans le corps (1) du filtre au moyen de la partie (17 ; 43) de maintien et **en ce que**, par la partie (17 ; 43) de maintien, la quantité de milieu de remplissage à l'intérieur du corps (31 ; 41) creux peut être modifiée au moyen d'un dispositif (20) de remplissage.

6. Dispositif de filtration suivant l'une des revendications précédentes, **caractérisé en ce que** l'élément (11) de filtre a deux coiffes (15, 17) d'extrémité entre lesquelles s'étend le milieu (13) filtrant en plusieurs couches, de préférence plissé, dont au moins l'une des coiffes est prise par la partie (43) de maintien du corps (41) creux.

7. Dispositif de filtration suivant l'une des revendications précédentes, **caractérisé en ce que**, pour éviter des volumes morts dans le corps (1) du filtre, au moins un bloc (37 ; 59) de réception est utilisé dans ce corps (1) et **en ce que** la partie (43) de maintien, constituée à la manière d'un bloc, et/ou le bloc (37 ; 59) de réception a ou ont chacun un dispositif de mise en température, notamment un dispositif de chauffage.

8. Dispositif de filtration suivant l'une des revendications précédentes, **caractérisé en ce que** le bord libre du corps (41) creux est pourvu, à la manière d'une vessie d'accumulateur, d'un épaississement (49), qui pénètre à complémentarité de forme dans un évidement (51) conjugué de la partie (43) de maintien.
